# EUROPÄISCHE PATENTANMELDUNG

(11) **EP 4 223 536 A1**
(43) Veröffentlichungstag der Anmeldung: **09.08.2023**
(21) Anmeldenummer: 23155170.6
(22) Anmeldetag: 06.02.2023
(51) Int. Cl.: B41F 31/26, B41F 13/08, B41F 33/02, B41N 7/00, B65H 27/00, F16C 13/00

(54) **SENSORWALZE**

(30) Priorität: 04.02.2022 EP 22155233; 24.06.2022 EP 22181021
(71) Anmelder: Felix Böttcher GmbH & Co. KG, 50933 Köln (DE)
(72) Erfinder: Breidenbach, Stefan, 53639 Königswinter (DE); Will, Thomas, 50670 Köln (DE); Große, Silke, 41539 Dormagen (DE); Sommer, Reinhard, 50259 Pulheim (DE); Filla, Peter, 51069 Köln (DE)
(74) Vertreter: dompatent von Kreisler Selting Werner - Partnerschaft von Patent- und Rechtsanwälten mbB

(57) **Zusammenfassung**

Verfahren zur Herstellung einer Walze mit einem oder mehreren eingebetteten Sensoren umfassend die Schritte:
- Bereitstellen eines Walzenkerns mit mindestens einer Bezugslage
- Bereitstellen eines oder mehrerer elektronischen Sensoren auf einer Leiterfolie mit elektrischem Anschluss
- Montage des einen oder der mehreren elektronischen Sensoren auf der Bezugslage, wobei der elektrische Anschluss entlang des Walzenkerns geführt wird
- Beschichten mit einem Walzenbezug aus Kautschuk oder Polyurethan
- Schleifen der Walzenoberfläche
- Konnektieren des elektrischen Anschlusses an eine Auswerteelektronik,
wobei oberhalb und/oder unterhalb des einen oder der mehreren elektronischen Sensoren eine Montage einer Elastomerschicht erfolgt, die eine größere Härte hat als die Bezugslage.

## Beschreibung

Die vorliegende Erfindung betrifft eine Walze mit mindestens einem eingebetteten Sensor.

Mit Elastomeren beschichtete Walzen werden in vielen industriellen Prozessen eingesetzt, beispielsweise in der Druckindustrie, insbesondere im Offsetdruck und der Verpackungsherstellung. Solche Walzen haben einen starren Kern, typischerweise aus Metall- oder Nichtmetall-Werkstoffen, beispielsweise carbonfaser- oder glasfaserverstärkten Kunststoffen. Auf dem Kern befinden sich eine oder mehrere Lagen eines elastomeren Werkstoffs, insbesondere Gummi oder Polyurethan. Die elastomeren Bezüge können bei Walzen im Regelfall ausgetauscht werden; sie unterliegen einem Verschleiß.

Obwohl Walzen seit langer Zeit eingesetzt werden, gibt es wenig Informationen über die tatsächlichen Abläufe innerhalb der Walze. Viele Schritte in der Nutzung von Walzen beruhen daher auf Erfahrungswerten.

Aus EP 1 493 565 beschreibt eine Walze mit einem integrierten Drucksensor. Dort wird auf eine DD233653 von 1984 Bezug genommen, die ebenfalls Sensoren in Walzen einbauen möchte. Obwohl die grundsätzliche Idee also bekannt ist, sind entsprechende Produkte nicht auf dem Markt.

Es wird davon ausgegangen, dass dies daran liegt, dass keine der Walzen eine hinreichende Stabilität für eine kommerzielle Nutzung erreichte, sondern entweder die Sensoren im Einsatz zerstört wurden oder der Sensor die Walzennutzung störte.

Aufgabe der vorliegenden Erfindung war es, die Nutzung von Walzen zu verbessern. Insbesondere sollte die Walze die Standzeit haben, die Anwender im industriellen Bereich erwarten.

Gelöst wird die Aufgabe durch ein Verfahren zur Herstellung einer Walze mit einem eingebetteten Sensor umfassend die Schritte:
- Bereitstellen eines Walzenkerns oder eines Walzenkerns mit mindestens einer Bezugslage
- Bereitstellen eines oder mehrerer elektronischen Sensoren auf einer Leiterfolie mit elektrischem Anschluss
- Montage des einen oder der mehreren elektronischen Sensoren auf dem Walzenkern oder der Bezugslage, wobei der elektrische Anschluss entlang des Walzenkerns geführt wird
- Beschichten mit einem Walzenbezug aus Gummi oder Polyurethan
- Schleifen der Walzenoberfläche
- Konnektieren des elektrischen Anschlusses an eine Auswerteelektronik.

Erfindungsgemäß wird also eine Walze mit einem oder mehreren eingebetteten Sensoren hergestellt. Hierzu wird ein Walzenkern oder ein Walzenkern mit mindestens einer Bezugslage bereitgestellt. Geeignete Materialien für Walzenkerne sind insbesondere Metalle, carbonfaserverstärkte Kunststoffe und glasfaserverstärkte Kunststoffe.

Wichtig ist, dass die erfindungsgemäß eingesetzten Sensoren eingebettet sind, also von elastomeren Bezugslagen auf der Walze abgedeckt sind. In einigen Ausführungsformen ist auch mindestens eine Bezugslage unter den eingesetzten Sensoren.

Eine Bezugslage ist eine Schicht eines elastomeren Materials, die die Walze auf der Mantelfläche im Wesentlichen vollständig abdeckt.

Weiterhin werden ein oder mehrere Sensoren auf einer Leiterfolie bereitgestellt. "Leiterfolien" werden im Englischen auch als "flexible electronics" oder "flex circuits" bezeichnet. Es handelt sich dabei um ein flexibles Substrat, auf dem elektronische Bauteile montiert sind. Eine Übersicht zu solchen Produkten findet sich zum Beispiel in Wong, William S.; Salleo, Alberto (2009). "Flexible Electronics (Materials and Applications)". Electronic Materials: Science. Electronic Materials: Science & Technology. 11**.**

Obwohl solche Leiterfolien typischerweise nur für gelegentliche mechanische Belastungen entwickelt sind, beispielsweise bei einem Laptop zum Verbinden der Hauptplatine mit dem Bildschirm, können diese durch Einbettung in das Walzenmaterial überraschenderweise so geschützt werden, dass sie die Belastung in einer Walze überstehen, wobei die mechanische Belastung durch elastische Verformungen im Laufe der Lebenszeit einer Walze Milliarden-fach erfolgt.

Geeignete Leiterfolien weisen ein Kunststoffsubstrat auf, das beispielsweise Polyimid, Polyamid, Polyimid-Polyamid-Copolymeren, Polyetheretherketonen (PEEK) oder Polyester umfasst. Besonders bevorzugte Produkte werden als Flex PCB bezeichnet.

Solche Leiterfolien haben erfindungsgemäß einen elektrischen Anschluss zur Verbindung mit einer Auswerteelektronik.

Die erfindungsgemäß eingesetzten ein oder mehreren elektronischen Sensoren auf der Leiterfolie werden auf dem Walzenkern oder auf vorhandener Bezugslage montiert und der elektrische Anschluss entlang des Walzenkerns geführt.

Geeignete Sensoren sind z.B. Temperatursensoren, Drucksensoren, Kraftsensoren, Lagesensoren, Schwingungssensoren, Dehnungssensoren. In einigen Fällen können Sensoren auch mehrere Informationen gleichzeitig erfassen, beispielsweise piezoelektrische Sensoren. Weitere Sensoren wie Beschleunigungs- und Lagesensoren können auch in der Auswerteelektronik integriert sein, die mit an der Walze oder der Achse platziert ist.

In einer besonders bevorzugten Ausführungsform befinden sich mehrere Sensoren entlang des Kerns der Walze, beispielsweise in der Mitte, im Randbereich und ein weiterer Sensor dazwischen, so dass Informationen über die gesamte Breite der Walze erzielt werden.

In einer bevorzugten Ausführungsform ist auch der elektrische Anschluss als Leiterfolie ausgeführt. In anderen Ausführungsformen ist der Anschluss ein Kabel.

In einigen Ausführungsformen hat es sich als vorteilhaft erwiesen, die Leiterfolie mit den Sensoren oder die Leiterfolie des elektrischen Anschlusses mit einem Haftvermittler zu beschichten. Geeignete Haftvermittler sind insbesondere die in der Gummiindustrie üblichen Haftmittel für Gummi-Substrat-Verbindungen.

In einigen Ausführungsformen wird vor dem Haftvermittler noch ein Schutzlack aufgetragen. Solche Schutzlacke sind kommerziell erhältlich und dem Fachmann bekannt. Lacke für den Schutz von Leiterplatten sind zum Beispiel aus DE69905846T2 bekannt.

Anschließend wird der Walzenbezug vervollständigt, in dem Gummi oder Polyurethan als weitere Schichten aufgetragen wird. In einer typischen Ausführungsform erfolgt das Beschichten durch Konfektionieren von Kalanderplatten aus Gummimischung. Alternativ ist beispielsweise die Herstellung auch über ein Extrusionsverfahren oder im Formenguss oder Rotationsguss möglich.

In einer bevorzugten Ausführungsform wird im Bereich des oder der Sensoren eine Elastomerschicht mit höherer Härte als das generelle Beschichtungsmaterial auf Bezugslagen aufgebracht und hierauf der oder die Sensoren.

Alternativ oder zusätzlich kann eine Elastomerschicht mit höherer Shorehärte auch auf dem Sensor, also vor dem weiteren Beschichten der Walze aufgebracht werden, sodass der Sensor zunächst in eine Elastomerschicht höherer Härte eingebettet wird, die dann von dem Walzenbezug umschlossen wird.

In einer bevorzugten Ausführungsform ist eine härtere Lage nur unterhalb des oder der Sensoren montieren, zumindest oberhalb sind weichere Schichten.

In einer bevorzugten Ausführungsform ist eine härtere Lage nur oberhalb des oder der Sensoren montieren, zumindest oberhalb sind weichere Schichten.

In einer bevorzugten Ausführungsform ist eine härtere Lage unterhalb und oberhalb des oder der Sensoren montiert, zumindest oberhalb sind weichere Schichten.

Überraschenderweise ist eine solche härtere Elastomerlage nicht vollumfänglich erforderlich. Es genügt in einigen Ausführungsformen, sie im Bereich des Sensors oder der Sensoren zu montieren.

Zumindest in den Ausführungsformen, in denen die Sensoren mit einer härteren Elastomerschicht abgedeckt sind, kann die Walze neu beschichtet werden, ohne die Sensoren zu demontieren.

Eine härtere Elastomerschicht hat eine Härte von mindestens 20 ShoreA mehr als die Härte des Walzenbezugs.

In einer Ausführungsform könnte der Walzenbezug aus Bezugslagen der generellen Shorehärte von 50 Shore A gebildet werden. Eine typische härtere Elastomerschicht hätte dann beispielsweise 80-90 Shore A.

Bei Walzen mit aus Bezugslagen der generellen Shorehärte von 90 Shore A weist eine geeignete härtere Elastomerschicht zum Beispiel eine Härte von 80 Shore D auf.

Eine Umrechnung von Shore A und Shore D kann beispielsweise nach K. Trobisch: "Über den Zusammenhang zwischen Shore A- und Shore D-Härte". In: Zeitschrift "Kautschuk, Gummi, Kunststoffe" 34 , Nr. 5 (1989), S. 347-349 erfolgen.

Geeignete Elastomere für den Walzenbezug sind insbesondere Naturkautschuk (NR), Isoprenkautschuk (IR), Butadienkautschuk (BR), Ethylen-Propylen-Kautschuk (EPDM, EPM), Styrol-Butadien-Kautschuk (SBR), Acrylnitryl-Butadien-Kautschuk (NBR, HNBR, XNBR), Butylkautschuk (IIR, XIIR), Chloroprenkautschuk (CR), Acrylatkautschuk (ACM, AEM), Epichlorhydrinkautschuk (CO, ECO, ETER), Silikonkautschuk, Fluorsilikonkautschuk, Fluorkautschuk, Chlorsulfoniertes Polyethylen (CSM-Kautschuk) zu nennen. Auch Polyurethan ist ein übliches Elastomer für Walzen. Die erfindungsgemäße Kautschukmischung wird in üblicher Weise nach dem Aufbringen vulkanisiert.

Die Walzenoberfläche wird anschließend geschliffen und der elektrische Anschluss mit der Auswerteelektronik konnektiert.

Zu dem Schritt des Schleifens kann auch ein seitliches Beschneiden des Gummis oder Polyurethans gehören. Dabei ist entscheidend, dass beim seitlichen Beschneiden der elektrische Anschluss nicht beschädigt wird.

In einer Ausführungsform hat die Walze eine Härte von weniger als 100 Shore A.

In einer Ausführungsform umfasst das Verfahren einen Walzenkern mit einer Lage eines Elastomers mit einer ShoreD Härte von 70-90, darauf eine Montage von Sensoren, eine weitere Lage eines Elastomers mit einer ShoreD Härte von 70-90 und anschließendes Beschichten, Vulkanisieren und Endbearbeitung.

Ein eingebetteter Temperatursensor kann dann in weniger als 120 s eine Erwärmung durch höhere innere Reibung aufgrund einer höheren Geschwindigkeit oder Anstellkraft detektieren.

Ein wesentlicher Vorteil der Erfindung ist, dass eine sensorintegrierte Walze hergestellt wird, bei der die Sensoren durch den Einsatz in der Maschine (insbesondere in industriellen Anwendungen) nicht zerstört werden und bei der die Hauptfunktion durch die eingebauten Sensoren nicht beeinträchtigt wird. Durch die über die Sensorik erhaltenen Daten kann die Walze optimal eingestellt werden, wodurch ihre Lebensdauer erhöht wird. Des Weiteren können über die Sensorik Hinweise zu Eigenschaftsänderungen der Walze erhalten werden, die ggf. zu einer Optimierung der Produktion durch Walzenwechsel führen können.

In einer bevorzugten Ausführungsform wird die Auswerteelektronik an einer Walzenachse oder einer Walzenstirnfläche befestigt und kann dann zu einem weiteren Auslesegerät Daten drahtlos übermitteln. Entsprechende Übermittlungsstandards sind dem Fachmann bekannt.

Gegenstand der Erfindung ist auch eine Walze mit eingebettetem Sensor, der durch das erfindungsgemäße Verfahren erhältlich ist.

Beim Auftragen des Walzenbezuges auf den Kern wird dieser typischerweise über den Kern hinaus aufgetragen und anschließend geschnitten. Dabei ist es wichtig, dass der elektrische Anschluss nicht beschädigt wird.

In einer Ausführungsform werden Walzen verwendet, bei denen der Walzenkern an einer Stirnseite eine Ausdrehung hat. In diesen Fällen kann der elektrische Anschluss durch eine Bohrung am Rand des Kernmantels geführt werden.

Durch die eingesetzten Sensoren können unterschiedlichste Informationen über die Walze und ihre Betriebszustände ermittelt werden. Beispielsweise ergibt das Anfahren verschiedener Betriebszustände Beschleunigungswerte, Temperaturen und Änderungsgeschwindigkeiten für die verschiedenen Messparameter. Bei Abweichung von einem gewünschten Standardverlauf der Werte kann eine Betriebsstörung, eine Fehljustage der Walze oder eine Quellung oder Schrumpfung der Walze vorliegen, die so frühzeitig erkannt werden. Änderungen der dynamisch-mechanischen Beanspruchung des Elastomers resultieren aufgrund der viskoelastischen Eigenschaften kurzfristig in Temperaturänderungen. Es hat sich gezeigt, dass lokal unterschiedliche dynamische Beanspruchungen innerhalb weniger Sekunden als messbare Temperaturänderungen an den Sensoren erkennbar werden. Drohende Probleme im Prozess können so idealerweise beseitigt werden, bevor Ausschuss oder Fehlchargen produziert werden.

Auch eine Abweichung der Temperatur-Entwicklung über die Walzenbreite kann auf eine Fehljustage oder ein Problem mit dem Lager hindeuten, so kann rechtzeitig z.B. vor einem Lagerschaden gewarnt werden.

Auch können kleinere Temperaturunterschiede über die Walzenbreite zur Unterstützung bei der Walzenanstellung verwendet werden, um eine gleichmäßige Anstellung über die gesamten Walzenbreite zu erkennen.

Aus den Beschleunigungswerten und der Belastung durch Drehzahl und Temperatur kann auch die Produktlebensdauer hochgerechnet werden. Eine Veränderung der Temperaturentwicklung kann über den Walzenverschleiß Informationen liefern.

Aus Schwingungen lassen sich Oberflächenschäden an der Walze messtechnisch erfassen.

Die erfindungsgemäßen Walzen sind insbesondere als Druckwalze, Auftragswalze, Dosierwalze, Ausbrechwalze, Spülwalze, Transportwalze, Coil-Wagenrolle, Kontaktwalze, Klebewalze, Zuführwalze, Prägegegenwalze, Laminierwalze, Foulardwalze, Leitwalze, Quetschwalze, Druckrolle, Coronawalze, Nippwalze, Antriebsrolle, Presseurwalze, Lackierwalze, Beschichtungswalze, Abzugswalze, Breitstreckwalze, Flexowalze oder als Sleeve geeignet.

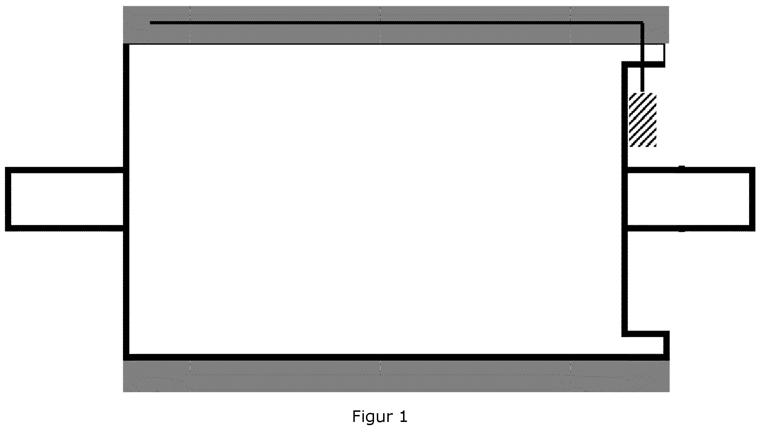

Figur 1 zeigt einen an der Stirnseite ausgedrehten Walzenkern mit einer Bohrung zur Durchführung des elektrischen Anschlusses 1 zur Auswerteelektronik 2. Dadurch ist der elektrische Anschluss beim Schleifen des Walzenbezuges 3 und insbesondere bei der Längenbearbeitung der Elastomer-Beschichtung geschützt.

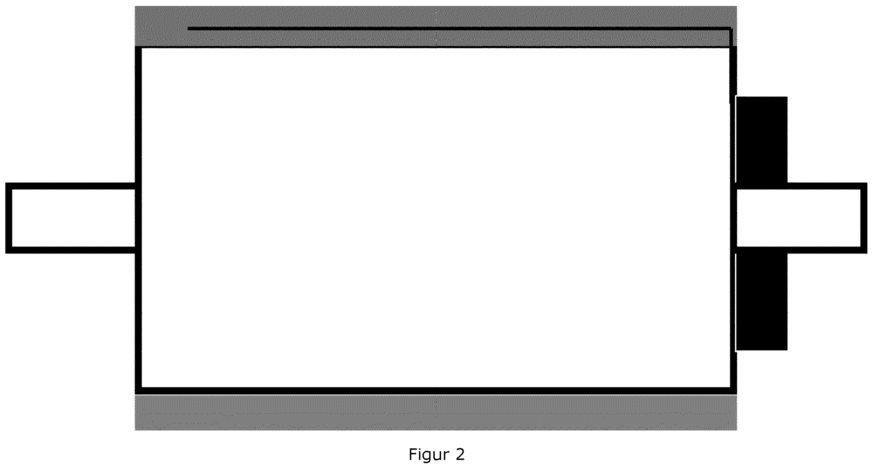

Figur 2 zeigt eine Ausführungsform mit einem Metallkern. Hier befindet sich eine Nut 4 im Stirnbereich des Metallkerns, durch die der elektrische Anschluss 1 geführt wird. Die Sensoren sind im Walzenbezug eingebettet. In dieser Ausführungsform ist die Auswerteelektronik 2 ringförmig um die Achse geführt.

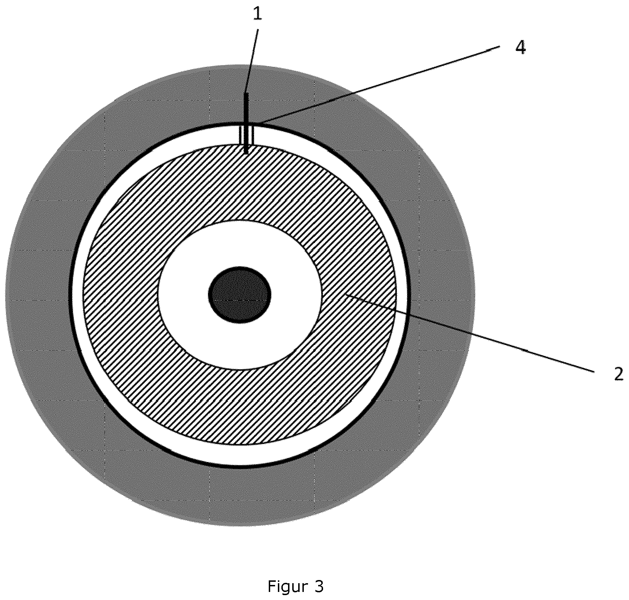

Figur 3 zeigt eine Stirnansicht. Der elektrische Anschluss 1 läuft durch die Nut 4 zur Auswerteelektronik 2.

### Beispiel 1

Eine Walze mit einem stirnseitig hinterdrehten Metallkern und einer Bohrung durch den Mantel wurde mit einer ersten Kalanderlage Hartgummi aus hochvernetztem Naturkautschuk (Ebonit)mit einer Shorehärte von 80 Shore D versehen. Eine zuvor mit Haftvermittler beschichtete Leiterfolie mit fünf Temperatursensoren wurde über die gesamte Breite der Walzen aufgetragen und der elektrische Anschluss durch die Bohrung geführt. Anschließend wurden in Kalandertechnik eine weitere Lage Hartgummi mit Shorehärte 80 Shore D aufgetragen. Nach Auftrag einer Schicht Haftvermittler wurden 5 Lagen EPDM-Weichgummi mit 80 Shore A aufkonfektioniert. Die Walze wurde vulkanisiert, geschliffen und am Rand auf Kernlänge geschnitten. Da die Anschlussleitung in der Bohrung lag, wurde sie beim Schneiden nicht beschädigt. Anschließend wurde die Walze auf eine Achse montiert und eine Auswerteelektronik mit der Anschlussleitung verbunden. Die Auswerteelektronik übertrug Daten über Bluetooth an ein EDV-System. Über das System war eine Übertragung an einen Cloudspeicher möglich und eine Darstellung der Daten auf einer Website.

### Beispiel 2

Eine Walze mit einem Metallkern und einer Nut an einer Stirnseite wurde mit einer Kalanderlage Acrylnitril-Butadien-Kautschuk der Shore-A-Härte 80 versehen. Eine Leiterfolie mit fünf Temperatursensoren wurde unter Verwendung von Haftvermittler über die gesamte Breite der Walzen aufgetragen und der elektrische Anschluss durch die Nut geführt. Anschließend wurde eine weitere Lage Acrylnitril-Butadien-Kautschuk der Shore- A-härte 80aufgebracht, gefolgt von 5 Lagen eines Acrylnitril-Butadien-Kautschuk der Shore-A-Härte 30. Die Walze wurde vulkanisiert, geschliffen und am Rand geschnitten. Da die Anschlussleitung in der Nut lag, wurde sie beim Schneiden nicht beschädigt. Anschließend wurde die Walze auf eine Achse montiert und eine Auswerteelektronik mit der Anschlussleitung verbunden. Die Auswerteelektronik übertrug Daten über Bluetooth an ein EDV-System. Über das System war eine Übertragung an einen Cloudspeicher möglich und eine Darstellung der Daten auf einer Website.

## Patentansprüche

1. Verfahren zur Herstellung einer Walze mit einem oder mehreren eingebetteten Sensoren umfassend die Schritte:
- Bereitstellen eines Walzenkerns mit mindestens einer Bezugslage
- Bereitstellen eines oder mehrerer elektronischen Sensoren auf einer Leiterfolie mit elektrischem Anschluss
- Montage des einen oder der mehreren elektronischen Sensoren auf der Bezugslage, wobei der elektrische Anschluss entlang des Walzenkerns geführt wird
- Beschichten mit einem Walzenbezug aus Kautschuk oder Polyurethan
- Schleifen der Walzenoberfläche
- Konnektieren des elektrischen Anschlusses an eine Auswerteelektronik,
wobei oberhalb und/oder unterhalb des einen oder der mehreren elektronischen Sensoren eine Montage einer Elastomerschicht erfolgt, die eine größere Härte hat als die Bezugslage.

2. Verfahren nach Anspruch 1, wobei der elektrische Anschluss so durch den Walzenkern geführt wird, dass die Stirnfläche der Walze geschnitten werden kann, ohne die Anschlussleitung beschädigt wird.

3. Verfahren nach Anspruch 1 oder 2, wobei die Leiterfolie ein Flex PCB sind.

4. Verfahren nach einem der Ansprüche 1 bis 3, wobei die elektronischen Sensoren ausgewählt werden aus Temperatursensoren, Drucksensoren, Kraftsensoren, Lagesensoren, Schwingungssensoren und Dehnungssensoren.

5. Verfahren nach einem der Ansprüche 1 bis 4, wobei der elektrische Anschluss eine weitere Leiterfolie ist.

6. Verfahren nach einem der Ansprüche 1 bis 5, wobei
(i) mehrere elektronische Sensoren montiert werden und/oder
(i) mindestens ein weiterer Sensor in der Auswerteelektronik integriert ist.

7. Verfahren nach einem der Ansprüche 1 bis 6, wobei das Beschichten mit dem Walzenbezug durch Konfektionieren von Kalanderplatten, über ein Extrusionsverfahren oder im Formenguss oder Rotationsguss erfolgt.

8. Verfahren nach einem der Ansprüche 1 bis 7, wobei das Kautschuk für den Walzenbezug ausgewählt wird aus Acrylnitril-Butadien-Kautschuk, Styrol-Butadien-Kautschuk, Ethylen-Propylen-Dien-Kautschuk, Naturkautschuk, Isoprenkautschuk, Butadienkautschuk, Ethylen-Propylen-Kautschuk, Butylkautschuk, Chloroprenkautschuk, Acrylatkautschuk, Epichlor-hydrinkautschuk, Silikonkautschuk, Fluorsilikonkautschuk, Fluorkautschuk, Chlorsulfoniertes Polyethylen-Kautschuk und Mischungen davon.

9. Verfahren nach Anspruch 8, wobei der Kautschuk vulkanisiert wird.

10. Verfahren nach einem der Ansprüche 1 bis 9, wobei die Leiterfolie mit den Sensoren mit einem Haftvermittler beschichtet ist, bevorzugt wobei vor dem Haftvermittler ein Schutzlack auf die Leiterfolie mit den Sensoren aufgetragen wird.

11. Verfahren nach einem der Ansprüche 1 bis 10, wobei die Auswerteelektronik auf einer Walzenachse befestigt ist und eine Datenübertragung zu einem Auslesegerät per Funk erfolgt.

12. Verfahren nach einem der Ansprüche 1 bis 11, wobei die Leiterfolie ein Kunststoffsubstrat auf Basis von Polyimid, Polyamid, Polyimid-Polyamid-Copolymeren, Polyetheretherketonen (PEEK) oder Polyester umfasst.

13. Walze mit mindestens einem eingebettetem Sensor erhältlich durch das Verfahren nach einem der Ansprüche 1 bis 12.

14. Walze nach Anspruch 13, wobei die Walze eine Druckwalze, Auftragswalze, Dosierwalze, Ausbrechwalze, Spülwalze, Transportwalze, Coil-Wagenrolle, Kontaktwalze, Klebewalze, Zuführwalze, Prägegegenwalze, Laminierwalze, Foulardwalze, Leitwalze, Quetschwalze, Druckrolle, Coronawalze, Nippwalze, Antriebsrolle, Presseurwalze, Lackierwalze, Beschichtungswalze, Abzugswalze, Breitstreckwalze, Flexowalze oder ein Sleeve ist.
